# EUROPÄISCHE PATENTSCHRIFT

(11) **EP 1 108 141 B1**
(45) Veröffentlichungstag und Bekanntmachung des Hinweises auf die Patenterteilung: **18.05.2005**
(21) Anmeldenummer: 00943562.9
(22) Anmeldetag: 04.05.2000
(51) Int. Cl.: F04B 11/00, F04B 1/04, F04B 53/16

(54) **KOLBENPUMPE**
PISTON PUMP
POMPE A PISTON

(30) Priorität: 24.06.1999 DE 19928913
(43) Veröffentlichungstag der Anmeldung: 20.06.2001
(73) Patentinhaber: ROBERT BOSCH GMBH, 70442 Stuttgart (DE)
(72) Erfinder: ALAZE, Norbert, D-71706 Markgroeningen (DE)
(86) Internationale Anmeldenummer: PCT/DE2000/001428
(87) Internationale Veröffentlichungsnummer: WO 2001/000990

(56) Entgegenhaltungen:
- DE-A- 19 732 791
- DE-A- 19 732 818
- US-A- 5 123 819
- US-A- 5 213 482
- US-A- 5 588 817
- US-A- 5 609 182

## Beschreibung

Die Erfindung betrifft eine Kolbenpumpe nach der Gattung des Hauptanspruchs, die insbesondere für eine hydraulische Fahrzeugbremsanlage vorgesehen ist.

Eine derartige Kolbenpumpe ist bekannt aus der US-A-5,213,482. Diese bekannte Kolbenpumpe weist eine Pumpenbohrung auf, die in einem Hydraulikblock angebracht ist, welcher ein Pumpengehäuse bildet. Bei der bekannten Kolbenpumpe ist eine Laufbuchse in die Pumpenbohrung eingesetzt, wobei ein Kolben in der Laufbuchse axial verschieblich geführt ist. Mittels eines Exzenters, welcher an einem Stirnende des Kolbens angeordnet und rotierend antreibbar ist, ist der Kolben zu einer in axialer Richtung in der Pumpenbohrung hin- und hergehenden Hubbewegung antreibbar, die in an sich bekannter Weise die Förderung von Fluid bewirkt. Neben den übrigen Merkmalen des Hauptanspruchs weist die bekannte Kolbenpumpe einen Auslasskanal auf, der zwischen einem Verschlussteil und einer Laufbuchse ausgebildet ist. Eine dem Auslassventil der Pumpe nachgeschaltete Drossel zur Dämpfung von Druckpulsationen ist im Unterschied zum Gegenstand vorliegender Erfindung abseits der Kolbenpumpe durch einen spanabhebenden, separaten Arbeitsgang im Pumpengehäuse hergestellt und damit nicht in die Kolbenpumpe integriert.

Die US-A-5,123,819 offenbart ferner eine Kolbenpumpe, deren Auslasskanal durch eine Radialbohrung in der Laufbuchse gebildet ist. Im Auslasskanal ist eine Drosselstelle vorgesehen. Aufgrund der Radialbohrung ist eine spanlose Herstellung der Laufbuchse nicht möglich, was zwangsweise zu höheren Herstellkosten der Kolbenpumpe führt.

Eine Kolbenpumpe mit einem in einer Laufbuchse geführten Kolben, einem mit der Laufbuchse zusammenwirkenden, die Pumpenbohrung druckdicht verschließenden Verschlussteil und einem zwischen Verschlussteil und Laufbuchse ausgebildeten Auslasskanal ist auch aus der DE 197 32 791 A1 bekannt. Diese Kolbenpumpe weist keine im Auslasskanal angeordnete, integrierte Drossel auf.

Wie beispielsweise in der DE 42 26 646 A1 offenbart, sind derartigen Kolbenpumpen üblicherweise eine Dämpferkammer und eine Drossel hydraulisch nachgeschaltet, die beide in dem das Pumpengehäuse bildenden Hydraulikblock außerhalb der Pumpenbohrung und separat von der Kolbenpumpe angeordnet sind.

### Vorteile der Erfindung

In die erfindungsgemäße Kolbenpumpe mit den Merkmalen des Anspruchs 1 ist eine Drossel integriert die im Pumpenauslaß angeordnet ist. Die Drossel ist vorzugsweise einem Auslaßventil der Kolbenpumpe hydraulisch nachgeschaltet, also in Strömungsrichtung hinter dem Auslaßventil der Kolbenpumpe angeordnet. Die Drossel kann beispielsweise als Blende, Düse oder sonstige Querschnittsverengung in der Pumpenbohrung oder in einem Auslaßkanal im Pumpengehäuse angeordnet sein. Die Drossel dient der Dämpfung von Druckpulsationen des mit der Kolbenpumpe geförderten Fluids, die die Kolbenpumpe aufgrund ihrer pulsierenden Förderweise bewirkt. Die Integration der Drossel in die Kolbenpumpe hat den Vorteil, daß eine separate und extern beispielsweise in einem Hydraulikblock unterzubringende Drossel eingespart wird. Weiterer Vorteil ist, daß eine der Kolbenpumpe hydraulisch nachgeschaltete Dämpferkammer verzichtbar ist, die bei bekannten hydraulischen Fahrzeugbremsanlagen als notwendig angesehen wird.

Diese Ausgestaltung der Erfindung hat den Vorteil, daß kein separates Bauteil für die Drossel erforderlich ist, sie ermöglicht eine günstige Herstellung der Drossel und hat den Vorteil, daß die Drossel keinen zusätzlichen Bauraum einnimmt, d. h. die Drossel ist platzsparend in die Kolbenpumpe integriert.

Die Unteransprüche haben vorteilhafte Ausgestaltungen und Weiterbildungen der im Hauptanspruch angegebenen Erfindung zum Gegenstand.

Der Auslaßkanal kann beispielsweise als Radialnut in einem Stirnrand einer rohrförmigen Laufbuchse ausgebildet sein. Gemäß Anspruch 2 weist die Laufbuchse einen Laufbuchsenboden auf einer dem Verschlußteil zugewandten Stirnseite auf. Der Auslaßkanal ist durch eine Nut gebildet, die in einer am Verschlußteil anliegenden Stirnfläche des Laufbuchsenbodens und/oder in einer am Laufbuchsenboden anliegenden Fläche des Verschlußteils angebracht und die vom Verschlußteil bzw. dem Laufbuchsenboden abgedeckt ist. Die Nut weist eine verjüngte Stelle auf, welche die Drossel bildet.

Ein Entlastungskanal gemäß Anspruch 3 hat den Vorteil, daß bei einer teilweisen oder vollständigen Verstopfung der Drossel das Verschlußteil druckentlastet ist. Ist die Drossel verstopft, so fließt mit der Kolbenpumpe gefördertes Fluid, welches aus einem vom Entlastungskanal umschlossenen Auslaßloch im Laufbuchsenboden austritt, sofern es zwischen die aneinander anliegenden Flächen des Laufbuchsenbodens und des Verschlußteils gelangt, in den Entlastungskanal und von dort an der Drossel vorbei in den Pumpenauslaß in Strömungsrichtung hinter der Drossel. Der das Auslaßloch im Laufbuchsenboden umschließende Entlastungskanal bewirkt, daß Fluid unter Druck das Verschlußteil ausschließlich auf der vom Entlastungskanal umschlossenen Fläche beaufschlagt, d. h. bei einer Verstopfung der Drossel wird die Belastung des Verschlußteils auf den Bruchteil der am Laufbuchsenboden anliegenden Fläche des Verschlußteils, der vom Entlastungskanal umschlossen wird, begrenzt. Es wird dadurch vermieden, daß eine Verstopfung der Drossel eine Undichtigkeit des Verschlußteils in der Pumpenbohrung oder ein Herausdrücken des Verschlußteils aus der Pumpenbohrung infolge eines bei verstopfter Drossel auftretenden hohen Drucks auf der Auslaßseite der Kolbenpumpe führt. Eine Selbszerstörung der Kolbenpumpe wird vermieden.

Die Herstellung der Laufbuchse bzw. des Verschlußteils als Umformteil (Ansprüche 5, 6) hat, außer dem Vorteil der kostengünstigen und schnellen Herstellbarkeit dieser Teile, den Vorteil, daß die den Auslaßkanal bildende Nut im Laufbuchsenboden und/oder in einer am Laufbuchsenboden anliegenden Fläche des Verschlußteil in einem Arbeitsgang mit der Herstellung der Laufbuchse bzw. des Verschlußteils herstellbar ist. Die Herstellung der Drossel verursacht dadurch keinen zusätzlichen Aufwand und keine zusätzlichen Kosten.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbtemszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
- Figur 1: einen Achsschnitt einer erfindungsgemäßen Kolbenpumpe; und
- Figur 2: eine Stirnansicht eines Verschlußteils der Kolbenpumpe aus Figur 1.

### Beschreibung des Ausführungsbeispiels

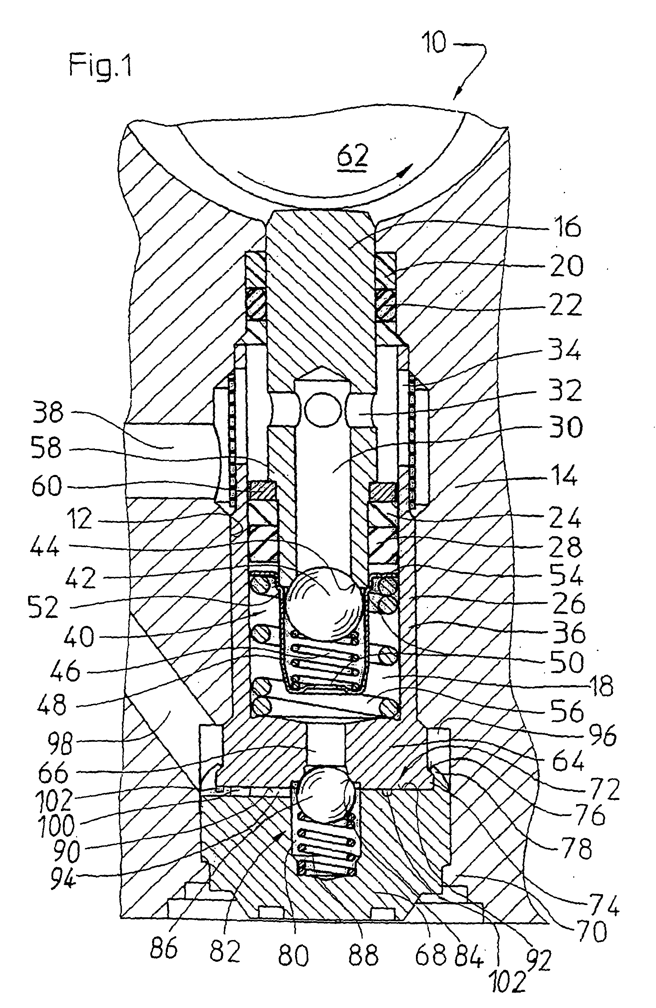

Die erfindungsgemäße, insgesamt mit 10 bezeichnete, in Figur 1 dargestellte, bevorzugt ausgewählte Kolbenpumpe ist in eine gestufte Pumpenbohrung 12 eingesetzt, welche in einem Hydraulikblock angebracht ist, der ein Pumpengehäuse 14 bildet. Der Hydraulikblock, von dem in der Zeichnung nur ein die Kolbenpumpe 10 umgebendes Bruchstück dargestellt ist, ist Bestandteil einer schlupfgeregelten, im übrigen nicht dargestellten, hydraulischen Fahrzeugbremsanlage. In ihn sind außer der Kolbenpumpe 10 weitere hydraulische Bauteile wie Magnetventile oder Druckspeicher eingesetzt und hydraulisch miteinander und mit der erfindungsgemäßen Kolbenpumpe 10 verschaltet.

Die Kolbenpumpe 10 weist einen Kolben 16 auf, dessen eines, einem Verdrängungsraum 18 abgewandtes Ende mit einem Führungsring 20 im Pumpengehäuse 14 geführt und mit einem Dichtring 22 abgedichtet ist. Ein anderes, dem Verdrängungsraum 18 zugewandtes Ende des Kolbens 16 ist mit einem Führungsring 24 in einer Laufbuchse 26 der Kolbenpumpe 10 geführt und mit einem Dichtring 28 abgedichtet. Die Laufbuchse 26 ist mit einer Preßpassung in die Pumpenbohrung 12 des Pumpengehäuses 14 eingesetzt. Die Preßpassung bewirkt eine Abdichtung zwischen Ein- und Auslaßseite, d. h. zwischen Niederund Hochdruckseite der Kolbenpumpe10.

Für den Pumpeneinlaß ist im Kolben 16 eine axiale Sackbohrung 30 von einer dem Verdrängungsraum 18 zugewandten Seite her angebracht, die nahe ihres Grundes von Querbohrungen 32 gekreuzt wird. Sack- und Querbohrungen 30, 32 kommunizieren durch Fenster 34 in einer Umfangswand 36 der Laufbuchse 26 mit einer Zuströmbohrung 38, die radial zur Kolbenpumpe 10 in dem das Pumpengehäuse 14 bildenden Hydraulikblock angebracht ist.

Am verdrängungsraumseitigen Ende des Kolbens 16 ist ein Rückschlagventil als Einlaßventil 40 angebracht: Das Einlaßventil 40 weist eine Ventilkugel 42 als Ventilschließkörper auf, die mit einem konischen Ventilsitz 44 zusammenwirkt, der an einer Mündung der Sackbohrung 30 des Kolbens 16 angebracht ist. Eine Schraubendruckfeder als Ventilschließfeder 46 drückt die Ventilkugel 42 gegen den Ventilsitz 44. Ventilkugel 42 und Ventilschließfeder 46 sind in einem Ventilkäfig 48 aufgenommen, welcher als napfförmiges Tiefziehteil aus Blech mit einem etwa dem Durchmesser des Kolbens 16 entsprechenden Durchmesser hergestellt und mit Durchströmöffnungen 50 versehen ist. Der Ventilkäfig 48 weist eine Ringstufe 52 auf, mit der er an einer dem Verdrängungsraum 18 zugewandten Stirnseite des Kolbens 16 anliegt. Er weist einen mit ihm einstückigen, nach außen stehenden Radialflansch 54 auf, gegen den eine Schraubendruckfeder als Kolbenrückstellfeder 56 drückt und auf diese Weise den Ventilkäfig 48 am Kolben 16 hält. Der Radialflansch 54 hält zugleich den Führungsring 24 und den Dichtring 28 zwischen sich und einem sich an einer Ringschulter 58 des Kolbens 16 abstützenden Stützring 60 in axialer Richtung auf dem Kolben 16.

Die Kolbenrückstellfeder 56 drückt über den Radialflansch 54 des Ventilkäfigs 48 den Kolben 16 in axialer Richtung gegen einen elektromotorisch rotierend antreibbaren Exzenter 62, der zum Antrieb des Kolbens 16 zu einer hin- und hergehenden Hubbewegung in an sich bekannter Weise dient.

Auf einer an den Verdrängungsraum 18 angrenzenden Seite weist die Laufbuchse 26 einen mit ihr einstückigen Laufbuchsenboden 64 auf, in dessen Mitte ein durchgehendes Auslaßloch 66 der Kolbenpumpe 10 angebracht ist.

Auf der Verdrängungsraumseite, unmittelbar stirnseitig an den Laufbuchsenboden 64 angrenzend, ist ein Verschlußteil 68, das die Form eines zylindrischen Stopfens aufweist, in die Pumpenbohrung 12 eingesetzt und durch eine Verstemmung 70 des Pumpengehäuses 14 in der Pumpenbohrung 12 befestigt und fluiddicht abgedichtet. Das Verschlußelement 68 hält zugleich die Laufbuchse 26 in der Pumpenbohrung 12.

Auf einer der Laufbuchse 26 zugewandten Stirnseite ist eine flache, vorzugsweise zylindrische Ausnehmung 72 im Verschlußteil 68 angebracht, in die die Laufbuchse 26 mit ihrem den Laufbuchsenboden 64 aufweisenden Ende eingesetzt ist. Zur Befestigung des Verschlußteils 68 an der Laufbuchse 26 weist die Laufbuchse 26 an ihrem in das Verschlußteil 68 eingesetzten Ende einen nach außen überstehenden Radialbund 74 auf, der eine Hinterschneidung 76 bildet, die von einem Rand 78 der Ausnehmung 72 des Verschlußteils 68 hintergriffen wird. Um den Rand 78 in Hintergriff mit der Hinterschneidung 76 zu bringen, ist er radial nach innen beispielsweise durch Bördeln, umgeformt. Zur Befestigung reicht ein Bördeln an drei bis vier Stellen des Umfangs aus.

An einem Grund der Ausnehmung 72 ist ein axiales Sackloch 80 im Verschlußteil 68 angebracht, in welchem ein Rückschlagventil als Auslaßventil 82 untergebracht ist, das mit einem balligen Ventilsitz 84 zusammenwirkt, welcher an einer dem Verschlußteil 68 zugewandten Mündung des Auslaßlochs 66 im Laufbuchsenboden 64 angebracht ist. Im Sackloch 80 des Verschlußteils 68 ist eine Ventilkugel 86 als Ventilschließkörper eingesetzt, welche von einer Schraubendruckfeder 88 als Ventilschließfeder gegen den Ventilsitz 84 gedrückt wird.

Eine äußere Stirnfläche 90 des Laufbuchsenbodens 64 ist eben. Mit ihr liegt der Laufbuchsenboden 64 an einer ebenfalls ebenen Grundfläche 92 der Ausnehmung 72 im Verschlußteil 68 an. In der Grundfläche 92 ist eine radiale Nut angebracht, die vom Laufbuchsenboden 64 zu einem Kanal abgedeckt ist, der einen Auslaßkanal 94 der Kolbenpumpe 10 bildet. Der Auslaßkanal 94 führt vom Sackloch 80 des Verschlußteils 68, in welchem das Auslaßventil 82 untergebracht ist, zum Außenumfang des Verschlußteils 68, der Auslaßkanal 94 geht durch den die Ausnehmung 72 des Verschlußteils 68 umschließenden Rand 78 hindurch und mündet in einen Ringkanal 96, welcher um den Laufbuchsenboden 64 herumverläuft und der vom Pumpengehäuse 14, dem Laufbuchsenboden 64 und dem Verschlußteil 68 umschlossen ist. Vom Ringkanal 96 abgehend ist eine Auslaßbohrung 98 im Pumpengehäuse 14 angebracht.

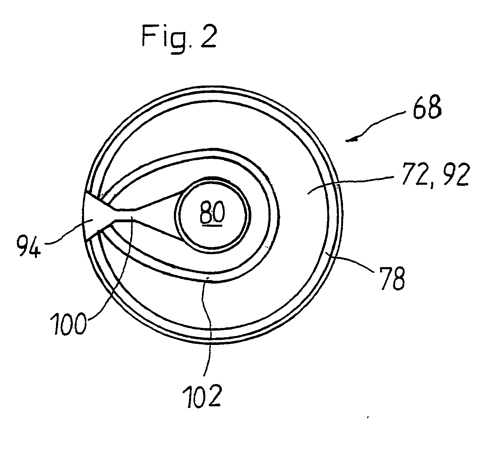

Figur 2 zeigt eine Stirnansicht auf die Grundfläche 92 der Ausnehmung 72 des Verschlußteils 68. Wie in Figur 2 gut sichtbar, verjüngt sich der Auslaßkanal 94 in der Grundfläche 92 der Ausnehmung 72 des Verschlußteils 68, er weist eine Stelle mit verengtem Querschnitt auf, welche eine in die Kolbenpumpe 10 integrierte Drossel 100 bildet.

Außer dem radial verlaufenden Auslaßkanal 94 ist eine weitere Nut in der Grundfläche 92 der Ausnehmung 72 des Verschlußteils 68 angebracht, welche einen Entlastungskanal 102 bildet. Der Entlastungskanal 102 hat einen in etwa eiförmigen Verlauf, er umschließt das Sackloch 80 im Verschlußteil 68, in welchem das Auslaßventil 82 untergebracht istund das Auslaßloch 66 im Laufbuchsenboden 64. Der Entlastungskanal 102 mündet an seinem "spitzen" Ende beidseitig radial außerhalb der Drossel 100, also in Strömungsrichtung hinter Drossel 100, in den Auslaßkanal 94. Dringt bei einer Verstopfung der Drossel 100 mit der Kolbenpumpe 10 geförderte Bremsflüssigkeit unter Druck zwischen die Grundfläche 92 der Ausnehmung 72 des Verschlußteils 68 und den an der Grundfläche 92 anliegenden Laufbuchsenboden 64 ein, wird maximal eine vom Entlastungskanal 102 umschlossene Fläche mit der unter Druck stehenden Bremsflüssigkeit beaufschlagt. Sobald die Bremsflüssigkeit an einer Stelle den Entlastungskanal 102 erreicht, fließt sie durch diesen an der Drossel 100 vorbei in den Auslaßkanal 94 und von dort weiter durch Ringkanal 96 in die Auslaßbohrung 98. Durch den Entlastungskanal 102 wird vermieden, daß bei einer Verstopfung der Drossel 100 das Verschlußteil 68 auf seiner gesamten Fläche mit unter Druck stehender Bremsflüssigkeit beaufschlagt wird. Dadurch wird ein Versagen der das Verschlußteil 68 druckdicht in der Pumpenbohrung 12 haltenden Verstemmung 70 vermieden. Der Entlastungskanal 102 verhindert eine Undichtigkeit des Verschlußteils 68 in der Pumpenbohrung 12 oder ein Herausdrücken des Verschlußteils 68 aus der Pumpenbohrung 12 wenn die Drossel 100 verstopft ist.

Die Laufbuchse 26 ist als Kaltschlagteil aus Stahl hergestellt, wobei in einem Arbeitsgang mit der Herstellung der Laufbuchse 26 auch das Auslaßloch 66 und der Ventilsitz 84 im Laufbuchsenboden 64 hergestellt sind. Es ist allenfalls eine Nachbearbeitung des Ventilsitzes 84 notwendig. Auf diese Weise läßt sich die Laufbuchse 26 preiswert und schnell spanlos herstellen.

Das Verschlußteil 68 ist als Kaltschlagteil aus Aluminium hergestellt, wobei die den Auslaßkanal 94 mit der Drossel 100 bildende Radialnut und die den Entlastungskanal 102 in einem Arbeitsgang mit dem Verschlußteil 68 durch Kaltschlagen hergestellt sind. Auch dies bringt einen erheblichen Kostenvorteil und Zeitersparnis bei der Herstellung mit sich.

## Patentansprüche

1. Kolbenpumpe mit einem eine Pumpenbohrung aufweisenden Pumpengehäuse (14), mit einer Laufbuchse (26), die in die Pumpenbohrung (12) im Pumpengehäuse (14) eingesetzt ist und in der ein Kolben (16) axial verschieblich zu einer in axialer Richtung hin- und hergehenden Hubbewegung antreibbar ist, mit einem Verschlussteil (68), das die Pumpenbohrung (12) druckdicht verschließend auf einer Stirnseite der Laufbuchse (26) in die Pumpenbohrung (12) eingesetzt ist, mit einem Auslasskanal (94) und mit einer in die Kolbenpumpe (10) integrierten Drossel (100), wobei der Auslasskanal (94) von einer Nut im Verschlussteil (68) und/oder in der Laufbuchse (26) gebildet ist, **dadurch gekennzeichnet, dass**
der Auslasskanal (94) eine verjüngte Stelle aufweist, die die Drossel (100) der Kolbenpumpe (10) bildet.

2. Kolbenpumpe nach Anspruch 1, **dadurch gekennzeichnet, daß** die Laufbuchse (26) einen Laufbuchsenboden (64) auf einer dem Verschlußteil (68) zugewandten Stirnseite aufweist, und daß die den Auslaßkanal (94) bildende Nut in einer am Laufbuchsenboden (64) anliegenden Fläche (92) des Verschlußteils (68) und/oder in einer am Verschlußteil (68) anliegenden Fläche (90) des Laufbuchsenbodens (64) angebracht ist.

3. Kolbenpumpe nach Anspruch 2, **dadurch gekennzeichnet, daß** der Laufbuchsenboden (64) von einem Auslaßloch (66) der Kolbenpumpe (10) durchsetzt ist, und daß die Kolbenpumpe (10) einen Entlastungskanal (102) aufweist, der zwischen dem Laufbuchsenboden (64) und dem Verschlußteil (68) angeordnet ist und der von einer Nut gebildet wird, die das Auslaßloch (66) im Laufbuchsenboden (64) umschließend im Laufbuchsenboden (64) und/oder im Verschlußteil (68) angebracht ist und die mit einem Pumpenauslaß (94) in Durchströmungsrichtung hinter der Drossel (100) kommuniziert.

4. Kolbenpumpe nach Anspruch 3, **dadurch gekennzeichnet, daß** die Kolbenpumpe (10) ein Rückschlagventil als Auslaßventil (82) aufweist, welches innerhalb des Entlastungskanals (102) im Verschlußteil (68) angeordnet ist, wobei eine dem Verschlußteil (68) zugewandte Mündung des Auslaßlochs (66) im Laufbuchsenboden (64) als Ventilsitz (84) des Auslaßventils (82) ausgebildet ist.

5. Kolbenpumpe nach Anspruch 1, **dadurch gekennzeichnet, daß** die Laufbuchse (26) ein Umformteil, insbesondere ein Kaltumformteil, insbesondere ein Kaltschlagteil ist.

6. Kolbenpumpe nach Anspruch 1, **dadurch gekennzeichnet, daß** das Verschlußteil (68) ein Umformteil, insbesondere ein Kaltumformteil, insbesondere ein Kaltschlagteil ist.

## Claims

1. Piston pump, with a pump casing (14) having a pump bore, with a liner (26) which is inserted into the pump bore (12) in the pump casing (14) and in which a piston (16) can be driven axially displaceably in an axially to-and-fro lifting movement, with a closing part (68) which is inserted into the pump bore (12) on one end face of the liner (26) so as to close the pump bore (12) in a pressure-tight manner, with an outlet duct (94), and with a throttle (100) integrated into the piston pump (10), the outlet duct (94) being formed by a groove in the closing part (68) and/or in the liner (26), **characterized in that** the outlet duct (94) has a narrowed point which forms the throttle (100) of the piston pump (10).

2. Piston pump according to Claim 1, **characterized in that** the liner (26) has a liner bottom (64) on an end face confronting the closing part (68), and **in that** the groove forming the outlet duct (94) is made in a face (92) of the closing part (68), the said face bearing against the liner bottom (64), and/or in a face (90) of the liner bottom (64), the said face bearing against the closing part (68).

3. Piston pump according to Claim 2, **characterized in that** an outlet hole (66) of the piston pump (10) passes through the liner bottom (64), and **in that** the piston pump (10) has a relief duct (102) which is arranged between the liner bottom (64) and the closing part (68) and which is formed by a groove which is made in the liner bottom (64) and/or in the closing part (68) so as to surround the outlet hole (66) in the liner bottom (64) and which communicates, downstream of the throttle (100) in the throughflow direction, with a pump outlet (94).

4. Piston pump according to Claim 3, **characterized in that** the piston pump (10) has as outlet valve (82) a non-return valve which is arranged within the relief duct (102) in the closing part (68), an issue of the outlet hole (66) in the liner bottom (64), the said issue confronting the closing part (68), being designed as a valve seat (84) of the outlet valve (82).

5. Piston pump according to Claim 1, **characterized in that** the liner (26) is a formed part, in particular a cold-formed part, in particular a cold-headed part.

6. Piston pump according to Claim 1, **characterized in that** the closing part (68) is a formed part, in particular a cold-formed part, in particular a cold-headed part.

## Revendications

1. Pompe à piston comprenant un boîtier de pompe (14) présentant un alésage de pompe, une chemise (26) montée dans l'alésage (12) du boîtier (14) et dans laquelle peut coulisser axialement un piston (16) entraîné en va-et-vient, une pièce de fermeture (68) montée dans l'alésage de pompe (12) et l'obturant avec étanchéité à la pression sur une face frontale de la chemise (26), un canal de sortie (94) et un étranglement (100) intégré à la pompe (10), le canal de sortie (94) étant constitué par une rainure dans la pièce de fermeture (68) et/ou dans la chemise (26),
**caractérisée en ce que**
le canal de sortie (94) présente une zone rétrécie qui constitue l'étranglement (100) de la pompe à piston (10).

2. Pompe à piston selon la revendication 1,
**caractérisée en ce que**
la chemise (26) présente un fond de chemise (64) sur sa face frontale en regard de la pièce de fermeture (68), la rainure formant le canal de sortie (94) étant réalisée dans la face (92) de la pièce de fermeture (68) en contact avec le fond de chemise (64) et/ou dans une portée (90) de ce fond (64) en contact avec la pièce de fermeture (68).

3. Pompe à piston selon la revendication 2,
**caractérisée en ce que**
le fond de chemise (64) est percé d'un trou de sortie (66) de la pompe (10) qui présente un canal de décharge (102) disposé entre le fond de chemise (64) et la pièce de fermeture (68), et constitué par une rainure qui est réalisée dans le fond de chemise (64) en entourant le trou de sortie (66) du fond (64) et/ou dans la pièce de fermeture (68), cette rainure communiquant avec une sortie de pompe (94) située en aval de l'étranglement (100) par rapport à la direction d'écoulement.

4. Pompe à piston selon la revendication 3,
**caractérisée en ce que**
la pompe à piston (10) présente une soupape anti-retour en tant que soupape de sortie (82), qui est montée à l'intérieur du canal de décharge (102) dans la pièce de fermeture (68), le trou (66) ayant une embouchure tournée vers la pièce de fermeture (68) et réalisée dans le fond de chemise (64) en tant que siège (84) de la soupape de sortie (82).

5. Pompe à piston selon la revendication 1,
**caractérisée en ce que**
la chemise (62) est une pièce réalisée par formage, en particulier par formage à froid, notamment par frappe à froid.

6. Pompe à piston selon la revendication 1,
**caractérisée en ce que**
la pièce de fermeture (68) est une pièce réalisée par formage, en particulier par formage à froid, notamment par frappe à froid.
